(19) Europäisches Patentamt
European Patent Office
Office européen des brevets

(11) **EP 3 294 806 B1**

(12) **EUROPEAN PATENT SPECIFICATION**

(45) Date of publication and mention
of the grant of the patent:
**17.03.2021 Bulletin 2021/11**

(51) Int Cl.:
***C08L 23/08*** *(2006.01)*

(21) Application number: **16721580.5**

(22) Date of filing: **26.04.2016**

(86) International application number:
**PCT/US2016/029344**

(87) International publication number:
**WO 2016/182727 (17.11.2016 Gazette 2016/46)**

(54) **RESIN COMPOSITIONS FOR EXTRUSION COATING**

HARZZUSAMMENSETZUNGEN FÜR EXTRUSIONSBESCHICHTUNG

COMPOSITIONS DE RÉSINE POUR REVÊTEMENT PAR EXTRUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2015 US 201562160867 P**

(43) Date of publication of application:
**21.03.2018 Bulletin 2018/12**

(73) Proprietor: **Dow Global Technologies LLC
Midland, MI 48674 (US)**

(72) Inventors:
• **WANG, Jian**
**Singapore 638025 (SG)**
• **DEMIRORS, Mehmet**
**Lake Jackson, TX 77566 (US)**
• **GINGER, Douglas S.**
**Lake Jackson, TX 77566 (US)**

(74) Representative: **Boult Wade Tennant LLP
Salisbury Square House
8 Salisbury Square
London EC4Y 8AP (GB)**

(56) References cited:
**WO-A2-2009/139957    US-A- 5 747 594**

**Description**

**FIELD**

The present invention relates generally to resin compositions and in some aspects, resin compositions for extrusion coating that provide high hot tack performance.

**INTRODUCTION**

It is known that low density polyethylene (LDPE) made by high-pressure polymerization of ethylene with free-radical initiators as well as homogeneous or heterogeneous linear low density polyethylene (LLDPE) and ultra low density polyethylene (ULDPE) made by the copolymerization of ethylene and α-olefins with metallocene or Ziegler coordination (transition metal) catalysts at low to medium pressures can be used, for example, to extrusion coat substrates such as paper board, paper, and/or polymeric substrates; to prepare extrusion cast film for applications such as disposable diapers and food packaging; and to prepare extrusion profiles such as wire and cable jacketing. However, although LDPE generally exhibits excellent extrusion processability and high extrusion drawdown rates, LDPE extrusion compositions typically lack sufficient abuse resistance and toughness for many applications. For extrusion coating and extrusion casting purposes, efforts to improve abuse properties by providing LDPE compositions having high molecular weights (i.e., having melt index, I2, less than about 2 g/10min) are not generally effective since such compositions have too much melt strength to be successfully drawn down at high line speeds.

While LLDPE and ULDPE extrusion compositions offer improved abuse resistance and toughness properties, and MDPE (medium density polyethylene) extrusion compositions offer improved barrier resistance (against, for example, moisture and grease permeation), these linear ethylene polymers typically exhibit unacceptably high neck-in and draw instability; they also typically exhibit relatively poor extrusion processability compared to pure LDPE. One proposal commonly used in the industry is to blend LDPE with LLDPE. While the addition of LLDPE to LDPE provides some improvement in functionality, additional improvements would be desirable. One area of interest is improved sealant performance especially in hot tack strength for multi-layer film structures that might be used, for example, in liquid packaging. While some existing resins provide excellent sealant performance, such resins can be cost prohibitive for some applications or for some film converters.

US 5 747 594 relates to a polymer mixture having high heat resistivity, low hexane extractive and controllably lower or higher modulus.

WO 2009/139957 relates to biaxially oriented LLDPE blends.

**SUMMARY**

The present invention utilizes ethylene-based polymers that can provide desirable sealing properties (e.g., hot tack strength) when incorporated in film structures. For example, in some embodiments, resin compositions of the present invention provide desirable hot tack strength across a broad range of temperatures, with a relatively low heat seal initiation temperature, and at a not very low density.

In one aspect, the present invention provides a composition comprising (a) a first linear low density polyethylene having a density of 0.900 to 0.915 grams per cubic centimeter ($g/cm^3$) and a melt index ($I_2$) of 5.0 to 25 grams/10 minutes (g/10 min), wherein the linear low density polyethylene is a blend of at least two components: (i) 20-40% by weight of a second linear low density polyethylene, wherein the second linear low density polyethylene is a homogeneously branched ethylene/a-olefin interpolymer having a density of 0.870-0.895 $g/cm^3$ and a melt index of 2.0-6.0 g/10 min; and (ii) 60-80% by weight of a third linear low density polyethylene, wherein the density of the third linear low density polyethylene is at least 0.02 $g/cm^3$ greater than the density of the second linear low density polyethylene and wherein the melt index ($I_2$) of the third linear low density polyethylene is at least twice the melt index ($I_2$) of the second linear low density polyethylene.

These and other embodiments are described in more detail in the Detailed Description.

**BRIEF DESCRIPTION OF THE DRAWINGS**

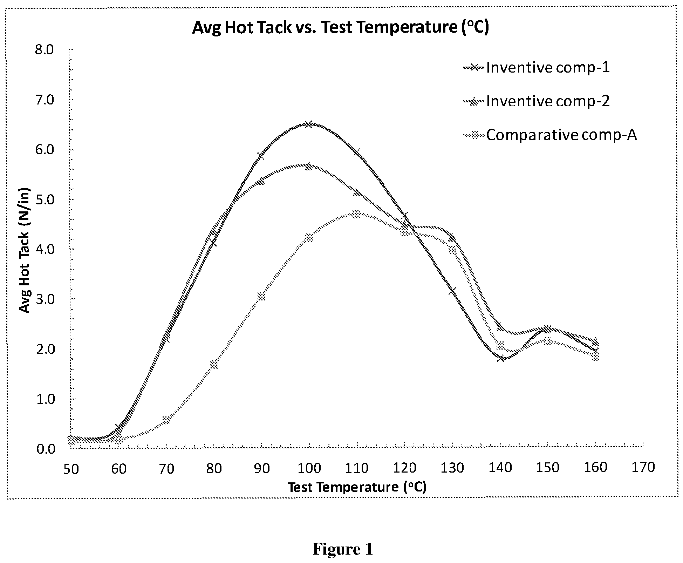

Figure 1 illustrates the results of hot tack testing described in the Examples.

**DETAILED DESCRIPTION**

Unless specified otherwise herein, percentages are weight percentages (wt%) and temperatures are in °C.

The term "composition," as used herein, includes material(s) which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities may be incorporated into and/or within the polymer.

The term "interpolymer," as used herein, refers to a polymer prepared by the polymerization of at least two different types of monomers. The generic term interpolymer thus includes copolymers (employed to refer to polymers prepared from two different types of monomers), and polymers prepared from more than two different types of monomers. The term "polymer", as used herein, refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers.

"Polyethylene" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however the following descriptions may be helpful in understanding the differences between some of these different polyethylene resins.

The term, "ethylene/$\alpha$-olefin interpolymer," as used herein, refers to an interpolymer that comprises, in polymerized form, a majority amount of ethylene monomer (based on the weight of the interpolymer), and at least one $\alpha$-olefin.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392). LDPE resins typically have a density in the range of 0.916 to 0.940 g/cm$^3$.

The term "LLDPE", includes both resin made using the traditional Ziegler-Natta catalyst systems as well as single-site catalysts such as metallocenes (sometimes referred to as "m-LLDPE") and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art, with gas and slurry phase reactors being most preferred.

The term "MDPE" refers to polyethylenes having densities from 0.926 to 0.940 g/cm$^3$. "MDPE" is typically made using chromium or Ziegler-Natta catalysts or using metallocene, constrained geometry, or single site catalysts, and typically have a molecular weight distribution ("MWD") greater than 2.5.

The term "HDPE" refers to polyethylenes having densities greater than about 0.940 g/cm$^3$, which are generally prepared with Ziegler-Natta catalysts, chrome catalysts or even metallocene catalysts.

Compositions of the present invention can be provided as resins that can be used in various film structures (e.g., a film, a layer in a multi-layer film structure, etc.). Compositions of the present invention can, for example, provide relatively high hot tack when incorporated into a layer of a multi-layer film structure without a significant reduction in overall density of the layer. One of the downsides of prior attempts to provide resin compositions with higher hot tack was that it required a significant reduction in density. Resin compositions of the present invention advantageously combine a relatively small fraction of a linear low density polyethylene with a very low density and a relatively low melt index (I$_2$) with a linear low density polyethylene having a higher density and a higher melt index (I$_2$). Resin compositions of the present invention can have an overall density and overall melt index that facilitate usage of the compositions in extrusion coating applications, extrusion lamination applications, cast film applications, and/or other applications.

As noted above, in some embodiments, the present invention provides a composition comprising (a) a first linear low density polyethylene having a density of 0.900 to 0.915 grams per cubic centimeter (g/cm$^3$) and a melt index

($I_2$) of 5.0 to 25 grams/10 minutes (g/10 min), wherein the linear low density polyethylene is a blend of at least two components: (i) 20-40% by weight of a second linear low density polyethylene, wherein the second linear low density polyethylene is a homogeneously branched ethylene/a-olefin interpolymer having a density of 0.870-0.895 g/cm$^3$ and a melt index of 2.0-6.0 g/10 min; and (ii) 60-80% by weight of a third linear low density polyethylene, wherein the density of the third linear low density polyethylene is at least 0.02 g/cm$^3$ greater than the density of the second linear low density polyethylene and wherein the melt index ($I_2$) of the third linear low density polyethylene is at least twice the melt index ($I_2$) of the second linear low density polyethylene.

The inventive composition may comprise a combination of two or more embodiments as described herein.

In some embodiments, the third linear low density polyethylene is a homogeneously branched ethylene/a-olefin interpolymer, while in other embodiments, the third linear low density polyethylene is a heterogeneously branched ethylene/a-olefin polymer.

In one embodiment, the first linear low density polyethylene has a melt index ($I_2$) of 10 to 20 g/10 mins.

In one embodiment, the second linear low density polyethylene has density of 0.890 g/cm$^3$ or less.

The second linear low density polyethylene, in one embodiment has a melt index of 3.0 to 5.0.

In one embodiment, the density of the third linear low density polyethylene is at least 0.024 g/cm$^3$ greater than the density of the second linear low density polyethylene. The density of the third linear low density polyethylene, in one embodiment, is at least 0.026 g/cm$^3$ greater than the density of the second linear low density polyethylene.

In one embodiment, a composition of the present invention further comprises 1 to 99 percent by weight of a high pressure low density polyethylene.

A composition of the present invention, in one embodiment, comprises 10 to 90 percent by weight of the first linear low density polyethylene.

In one embodiment, a composition of the present invention further comprises one more resin components in addition to the first linear low density polyethylene.

In one embodiment, a composition of the present invention further comprises one or more additives. In various embodiments, the one or more additives are selected from the group consisting of antioxidants, phosphites, cling additives, pigments, colorants, fillers, nucleators, clarifiers, or combinations thereof.

As noted above, in some embodiments, a composition of the present invention is suitable for use, or adapted for use, in extrusion coating applications, extrusion lamination applications, cast film applications, and/or other applications.

Some embodiments of the present invention relate to a film layer formed from any of the inventive compositions as described herein. Some embodiments of the present invention relate to a film comprising at least one film layer formed from any of the inventive compositions as described herein. Some embodiments of the present invention related to an article comprising at least one film layer formed from any of the inventive compositions as described herein.

Compositions of the present invention comprise a first linear low density polyethylene (LLDPE) that is a blend of at least two components, a second linear low density polyethylene and a third linear low density polyethylene. The preferred blends for making the first linear low density polyethylene used in compositions of the present invention can be prepared by any suitable means known in the art including tumble dry-blending, weigh feeding, solvent blending, melt blending via compound or side-arm extrusion, or the like as well as combinations thereof.

The first LLDPE can comprise up to 100 weight percent of the composition. As discussed below, in some embodiments, the composition can comprise a second polyethylene and/or other components. In some embodiments where other components are used, the first LLDPE can comprise at least 10 weight percent of the first LLDPE. All individual values and subranges from 10 to 100 percent by weight (wt%) are included herein and disclosed herein; for example the amount of the first linear low density polyethylene can be from a lower limit of 10, 20, 30, 40, 50, 60, 70, 80, or 90 wt% to an upper limit of 20, 30, 40, 50, 60, 70, 80, 90, or 100 wt%. For example, the amount of the first linear low density polyethylene can be from 10 to 100 wt%, or in the alternative, from 10 to 90 wt%, or in the alternative, from 20 to 80 wt%, or in the alternative from 30 to 70 wt%.

In some embodiments, the first LLDPE has a density in the range of 0.900 to 0.915 g/cm$^3$. For example, the density can be from a lower limit of 0.900, 0.902, 0.904, 0.906, 0.908, or 0.910 g/cm$^3$, to an upper limit of 0.908, 0.910, 0.912, 0.914, or 0.915 g/cm$^3$.

In one embodiment, the first LLDPE has a melt index ($I_2$) from 5.0 to 25 g/10 minutes. In some embodiments, the first LLDPE has a melt index ($I_2$), from 10 to 20 g/10 minutes, or from 10 to 15 g/10 minutes. For example, the melt index ($I_2$) can be from a lower limit of 5.0, 10, 15, or 20 g/10 minutes, to an upper limit of 15, 20, or 25 g/10 minutes.

In some embodiments the first LLDPE has a composition distribution branching index (CDBI) of 50 to 80. The first LLDPE, in some embodiments, has a CDBI of 50 to 70.

The first LLDPE can be a physical blend of dry materials, with subsequent melt blending, or the first LLDPE can be made in-situ, as described and claimed in U.S. Pat. No. 5,844,045.

A second LLDPE is a first component of the first LLDPE. The second LLDPE can comprise up to 40 weight percent of the first LLDPE. In some embodiments, the second LLDPE can comprise at least 20 weight percent of the composition. All individual values and subranges from 20 to 40 percent by weight (wt%) are included herein and disclosed herein; for example the amount of the second linear low density polyethylene can be from a lower limit of 20, 22, 24, 26, 28, or 30 to an upper limit of 30, 32, 34, 36, 38, or 40 wt%. For example, the amount of the second linear low density polyethylene can be from 22 to 38 wt%, or in the alternative, from 26 to 34 wt%.

The second LLDPE is preferably a homogeneously branched ethylene/a-olefin interpolymer. In one embodiment, the $\alpha$-olefin has less than, or equal to, 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-butene, 1-hexene and 1-octene, and further 1-hexene and 1-octene.

Homogeneous ethylene-based polymers (e.g., ethylene/a-olefin interpolymers) have a uniform branching distribution, that is, substantially all the polymer molecules have the same amount of comonomer incorporated in each. Composition distribution branching indices (CDBI) have been used to characterize branching distributions (or homogeneity or heterogeneity) and can be determined in accordance with U.S. Pat. No. 5,246,783 using the device described in U.S. Pat. No. 5,008,204.CDBI for heterogeneous polymers is between 30 and 70, while the CDBI for homogeneous polymers is between 80 and can be as high as 100.

In some embodiments, the second LLDPE has a density in the range of 0.875 to 0.895 g/cm$^3$. The second LLDPE, in some embodiments, has a density of 0.890 g/cm$^3$ or less. For example, the density can be from a lower limit of, 0.880, or 0.885 g/cm$^3$, to an upper limit of 0.890 or 0.895 g/cm$^3$.

In one embodiment, the second LLDPE has a melt index (I$_2$) from 2.0 to 6.0 g/10 minutes. In some embodiments, the second LLDPE has a melt index (I$_2$), from 3.0 to 5.0 g/10 minutes. For example, the melt index (I$_2$) can be from a lower limit of 2.0, 2.5, 3.0, or 3.5 g/10 minutes, to an upper limit of 4.5, 5.0, 5.5, or 6.0 g/10 minutes.

As set forth above, the second LLDPE combines a very low density with a relatively low melt index. The second LLDPE preferably has a density of 0.870 to 0.895 g/cm$^3$ and a melt index (I$_2$) of 2.0 to 6.0 g/10 minutes, more preferably a density 0.870 to 0.890 g/cm$^3$ and a melt index of 3.0 to 5.0 g/cm$^3$.

A second component of the first LLDPE is a third LLDPE. The third LLDPE has a higher density and higher melt index than the second LLDPE and is a larger part of the first LLDPE on the basis of weight percentage as set forth below.

The third LLDPE can comprise up to 80 weight percent of the first LLDPE. In some embodiments, the third LLDPE can comprise at least 60 weight percent of the first LLDPE. The third LLDPE preferably comprises 60 to 80 percent by weight of first LLDPE. All individual values and subranges from 60 to 80 percent by weight (wt%) are included herein and disclosed herein; for example the amount of the third linear low density polyethylene can be from a lower limit of 60, 62, 64, 66, 68, or 70 to an upper limit of 70, 72, 74, 76, 78, or 80 wt%. For example, the amount of the third linear low density polyethylene can be from 62 to 78 wt%, or in the alternative, from 66 to 74 wt%.

The third LLDPE is an ethylene/a-olefin interpolymer. In one embodiment, the $\alpha$-olefin has less than, or equal to, 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-butene, 1-hexene and 1-octene, and further 1-hexene and 1-octene.

The third LLDPE can be heterogeneously branched or homogeneously branched, but is preferably homogeneously branched. Homogeneous ethylene-based polymers have a uniform branching distribution, that is, substantially all the polymer molecules have the same amount of comonomer incorporated in each. Heterogeneously branched ethylene-based polymers (e.g., ethylene/a-olefin interpolymers) are typically produced using Ziegler/Natta type catalyst system, and have more comonomer distributed in the lower molecular weight molecules of the polymer. Composition distribution branching indices (CDBI) have been used to characterize branching distributions (or homogeneity or heterogeneity) and can be determined in accordance with U.S. Pat. No. 5,246,783 using the device described in U.S. Pat. No. 5,008,204. CDBI for heterogeneous polymers is between 30 and 70, while the CDBI for homogeneous polymers is between 80 and can be as high as 100.

In some embodiments, the third LLDPE has a density that is at least 0.02 g/cm$^3$ greater than the density of the second LLDPE. The third LLDPE, in some embodiments, has a density that is at least 0.024 g/cm$^3$ greater than the density of the second LLDPE. In some embodiments, the third LLDPE has a density that is at least 0.026 g/cm$^3$ greater than the density of the second LLDPE. In some embodiments, the density of the third LLDPE is in the range of 0.900 to 0.930 g/cm$^3$. The third LLDPE, in some embodiments, has a density of 0.890 g/cm$^3$ or more, preferably 0.900 g/cm$^3$ or more, more preferably 0.910 g/cm$^3$ or more. The density of the third LLDPE is in the range of 0.910 to 0.920 g/cm$^3$ in some embodiments. For example, the density can be from a lower limit of 0.900, 0.905, 0.910, 0.915 or 0.920 g/cm$^3$, to an upper limit of 0.910, 0.915, 0.920, 0.925, or 0.930 g/cm$^3$.

In some embodiments, the third LLDPE has a melt index ($I_2$) that is at least twice the melt index of the second LLDPE. The third LLDPE, in some embodiments, has a melt index ($I_2$) that is at least three times the melt index of the second LLDPE. In some embodiments, the third LLDPE has a melt index ($I_2$) that is at least four times the melt index of the second LLDPE. In some embodiments, the third LLDPE has a melt index ($I_2$) from 10 to 30 g/10 minutes. In some embodiments, the third LLDPE has a melt index ($I_2$), from 15 to 25 g/10 minutes. For example, the melt index ($I_2$) can be from a lower limit of 10, 12.5, 15, 17.5, 20, 22.5, or 25 g/10 minutes, to an upper limit of 20, 22.5, 25, 27.5, or 30 g/10 minutes.

As set forth above, the third LLDPE combines a density that is at least 0.020 g/cm$^3$ higher than the second LLDPE with a melt index ($I_2$) the melt index ($I_2$) of the second LLDPE.

The first LLDPE can comprise other components in some embodiments.

In addition to the first LLDPE, compositions of the present invention can comprise other components in some embodiments. In some embodiments, compositions of the present invention can further comprise a second polyethylene resin, such as another ethylene/a-olefin interpolymer. For example, compositions of the present invention, in some embodiments, can comprise a LDPE (i.e., a high pressure, low density polyethylene). The LDPE can comprise 1 to 99 percent by weight of the total composition, alternatively from 3 to 50 percent by weight of the total composition, alternatively from 10 to 40 percent, more preferably from 15 to 35 percent. In general the more of the LDPE resin which can be included, the less of the first LLDPE may be needed to achieve good neck-in properties. Such LDPE materials are well known in the art and include resins made in autoclave or tubular reactors. The preferred LDPE for use as the second polyethylene resin has a density in the range of from 0.915 to 0.930 g/cm$^3$, preferably from 0.916 to 0.925 g/cm$^3$, more preferably from 0.917 to 0.920 g/cm$^3$.

Additives such as antioxidants (e.g., hindered phenolics such as Irganox® 1010 or Irganox® 1076 supplied by Ciba Geigy), phosphites (e.g., Irgafos® 168 also supplied by Ciba Geigy), cling additives (e.g., PIB), Standostab PEPQ™ (supplied by Sandoz), pigments, colorants, fillers, nucleators, clarifiers, and the like can also be included in the compositions of the present invention, to the extent that they do not substantially interfere with the performance of the composition (e.g., in extrusion coating applications, extrusion lamination applications, and/or cast film applications). These compositions preferably contain no or only limited amounts of antioxidants as these compounds may interfere with adhesion to a substrate in some applications. The article made from or using the inventive composition may also contain additives to enhance antiblocking and coefficient of friction characteristics including, but not limited to, untreated and treated silicon dioxide, talc, calcium carbonate, and clay, as well as primary, secondary and substituted fatty acid amides, chill roll release agents, silicone coatings, etc. Other additives may also be added to enhance the anti-fogging characteristics of, for example, transparent cast films, as described, for example, by Niemann in U.S. Pat. No. 4,486,552. Still other additives, such as quaternary ammonium compounds alone or in combination with ethylene-acrylic acid (EAA) copolymers or other functional polymers, may also be added to enhance the antistatic characteristics of coatings, profiles and films of this invention and allow, for example, the packaging or making of electronically sensitive goods. Other functional polymers such as maleic anhydride grafted polyethylene may also be added to enhance adhesion, especially to polar substrates.

The preferred blends for making the polymer extrusion compositions of this invention can be prepared by any suitable means known in the art including tumble dry-blending, weigh feeding, solvent blending, melt blending via compound or side-arm extrusion, or the like as well as combinations thereof.

The compositions of this invention, whether used in monolayer or multilayered constructions, can be used to make extrusion coatings, extrusion profiles, and extrusion cast films as is generally known in the art. When the inventive composition is used for coating purposes or in multilayered constructions, substrates or adjacent material layers can be polar or nonpolar including for example, but not limited to, paper products, metals, ceramics, glass and various polymers, particularly other polyolefins, and combinations thereof. For extrusion profiling, various articles can potentially be fabricated including, but not limited to, refrigerator gaskets, wire and cable jacketing, wire coating, medical tubing and water piping, where the physical properties of the composition are suitable for the purpose. Extrusion cast film made from or with the inventive composition can also potentially be used in food packaging and industrial stretch wrap applications.

Unless otherwise indicated herein, the following analytical methods are used in the describing aspects of the present invention:

**Melt index**

Melt indices $I_2$ (or 12) and $I_{10}$ (or 110) were measured according to ASTM D-1238 at 190°C and at 2.16 kg and 10 kg load, respectively. Their values are reported in g/10 min.

**Density**

Samples for density measurement were prepared according to ASTM D4703. Measurements were made, according to ASTM D792, Method B, within one hour of sample pressing.

**Dynamic Shear Rheology**

Each sample was compression-molded into "3 mm thick x 25 mm diameter" circular plaque, at 177°C, for 5 minutes, under 10 MPa pressure, in air. The sample was then taken out of the press and placed on a counter top to cool.

Constant temperature, frequency sweep measurements were performed on an ARES strain controlled rheometer (TA Instruments), equipped with 25 mm parallel plates, under a nitrogen purge. For each measurement, the rheometer was thermally equilibrated for at least 30 minutes prior to zeroing the gap. The sample disk was placed on the plate, and allowed to melt for five minutes at 190°C. The plates were then closed to 2 mm, the sample trimmed, and then the test was started. The method had an additional five minute delay built in, to allow for temperature equilibrium. The experiments were performed at 190°C, over a frequency range from 0.1 to 100 rad/s, at five points per decade interval. The strain amplitude was constant at 10%. The stress response was analyzed in terms of amplitude and phase, from which the storage modulus (G'), loss modulus (G"), complex modulus (G*), dynamic viscosity ($\eta$* or Eta*), and tan $\delta$ (or tan delta) were calculated.

**DSC**

Differential Scanning Calorimetry (DSC) was measured by a TA Q1000 DSC (TA Instruments; New Castle, DE) equipped with an RCS (Refrigerated Cooling System) cooling accessory and an autosampler module is used to perform the tests. During testing, a nitrogen purge gas flow of 50 ml/minute is used. Each sample is pressed into a thin film and melted in the press at about 175 °C; the melted sample is then air-cooled to room temperature ($\sim$25 °C). A 3-10 mg sample of the cooled material is cut into a 6 mm diameter disk, weighed, placed in a light aluminum pan (ca 50 mg), and crimped shut. The sample is then tested for its thermal behavior.

The thermal behavior of the sample is determined by changing the sample temperature upwards and downwards to create a response versus temperature profile. The sample is first rapidly heated to 180 °C and held at an isothermal state for 3 minutes in order to remove any previous thermal history. Next, the sample is then cooled to -40 °C at a 10 °C/minute cooling rate and held at -40 °C for 3 minutes. The sample is then heated to 150 °C at 10 °C/minute heating rate. The cooling and second heating curves are recorded. The values determined are peak melting temperature ($T_m$), peak crystallization temperature ($T_c$), the heat of fusion ($H_f$). The heat of fusion ($H_f$) and the peak melting temperature are reported from the second heat curve. The peak crystallization temperature is determined from the cooling curve.

**Conventional Gel Permeation Chromatography (conv. GPC)**

A GPC-IR high temperature chromatographic system from, PolymerChar (Valencia, Spain), was equipped with a Precision Detectors (Amherst, MA), 2-angle laser light scattering detector Model 2040, an IR5 infra-red detector and a 4-capillary viscometer, both from PolymerChar. Data collection was performed using PolymerChAR InstrumentControl software and data collection interface. The system was equipped with an on-line, solvent degas device and pumping system from Agilent Technologies (Santa Clara, CA).

Injection temperature was controlled at 150 degrees Celsius. The columns used were three 10-micron "Mixed-B" columns from Polymer Laboratories (Shropshire, UK). The solvent used was 1,2,4 trichlorobenzene. The samples were prepared at a concentration of "0.1 grams of polymer in 50 milliliters of solvent." The chromatographic solvent and the sample preparation solvent each contained "200 ppm of butylated hydroxytoluene (BHT)." Both solvent sources were nitrogen sparged. Ethylene-based polymer samples were stirred gently at 160 degrees Celsius for three hours. The injection volume was 200 microliters, and the flow rate was 1 milliliters/minute. The GPC column set was calibrated by running 21 "narrow molecular weight distribution" polystyrene standards. The molecular weight (MW) of the standards ranges from 580 to 8,400,000 g/mole, and the standards were contained in six "cocktail" mixtures. Each standard mixture had at least a decade of separation between individual molecular weights. The standard mixtures were purchased from Polymer Laboratories. The polystyrene standards were prepared at "0.025 g in 50 mL of solvent" for molecular weights equal to, or greater than, 1,000,000 g/mole, and at "0.050 g in 50 mL of solvent" for molecular weights less than 1,000,000 g/mole.

The polystyrene standards were dissolved at 80°C, with gentle agitation, for 30 minutes. The narrow standards mixtures were run first, and in order of decreasing "highest molecular weight component," to minimize degradation. The polystyrene standard peak molecular weights were converted to polyethylene molecular weight using Equation 1 (as described in Williams and Ward, J. Polym. Sci., Polym. Letters, 6, 621 (1968)):

$$\text{Mpolyethylene} = A \times (\text{Mpolystyrene})^{B} \quad \text{(Eqn. 1),}$$

where M is the molecular weight, A is equal to 0.4316 and B is equal to 1.0.

Number-average molecular weight (Mn(conv gpc)), weight average molecular weight (Mw-conv gpc), and z-average molecular weight (Mz(conv gpc)) were calculated according to Equations 2-4 below.

$$Mn(conv\ gpc) = \frac{\sum_{i=RV\ integeration\ start}^{i=RV\ integration\ end}\left(IR_{measurement\ channel_i}\right)}{\sum_{i=RV\ integration\ start}^{i=RV\ integration\ end}\left(IR_{measurement\ channel_i} \Big/ LogM_{PE_i}\right)} \qquad (Eqn.\ 2).$$

$$Mw(conv\ gpc) = \frac{\sum_{i=RV\ integeration\ start}^{i=RV\ integration\ end}\left(LogM_{PE_i}\ IR_{measurement\ channel_i}\right)}{\sum_{i=RV\ integration\ start}^{i=RV\ integration\ end}\left(IR_{measurement\ channel_i}\right)} \qquad (Eqn.\ 3).$$

$$Mz(conv\ gpc) = \frac{\sum_{i=RV\ integration\ start}^{i=RV\ integration\ end}\left(LogM_{PE_i}^{\ 2}\ IR_{measurement\ channel_i}\right)}{\sum_{i=RV\ integration\ start}^{i=RV\ integration\ end}\left(LogM_{PE_i}\ IR_{measurement\ channel_i}\right)} \qquad (Eqn.\ 4).$$

In Equations 2-4, the RV is column retention volume (linearly-spaced), collected at "1 point per second," the IR is the baseline-subtracted IR detector signal, in Volts, from the IR5 measurement channel of the GPC instrument, and $LogM_{PE}$ is the polyethylene-equivalent MW determined from Equation 1. Data calculation were performed using "GPC One software (version 2.013H)" from PolymerChar.

**Crystallization Elution Fractionation (CEF)**

Comonomer distribution analysis is performed with Crystallization Elution Fractionation (CEF) (PolymerChar, Spain) (Monrabal et al, Macromol. Symp. 257, 71-79 (2007)) equipped with IR-4 detector (PolymerChar, Spain) and two angle light scattering detector Model 2040 (Precision Detectors, currently Agilent Technologies). IR-4 detector operates at compositional mode with the two filters of C006 and B057. A 10 micron guard column of 50X4.6 mm (PolymerLab, currently Agilent Technologies) was installed just before IR-4 detector in the detector oven. Ortho-dichlorobenzene (ODCB, 99% anhydrous grade) and 2,5-di-tert-butyl-4-methylphenol (BHT) were purchased from Sigma-Aldrich. Silica gel 40 (particle size 0.2~0.5 mm) was purchased from EMD Chemicals. The silica gel was dried in a vacuum oven at 160°C for about two hours before use. Eight hundred milligrams of BHT and five grams of silica gel were added to two liters of ODCB. ODCB containing BHT and silica gel is now referred to as "ODCB." This ODBC was sparged with dried nitrogen ($N_2$) for one hour before use. Dried nitrogen is such that is obtained by passing nitrogen at <90 psig over $CaCO_3$ and 5Å molecular sieves. The resulting nitrogen should have a dew point of approximately -73°C. Sample preparation is done with an autosampler at 4 mg/ml (unless otherwise specified) under shaking at 160°C for 2 hours. The injection volume is 300 ml. The temperature profile of CEF is: crystallization at 3°C/min from 110°C to 30°C, the thermal equilibrium at 30°C for 5 minutes (including Soluble Fraction Elution Time being set as 2 minutes), elution at 3°C/min from 30°C to 140°C. The flow rate during crystallization is 0.052 ml/min. The flow rate during elution is 0.50 ml/min. The data is collected at one data point/second. CEF column is packed by the Dow Chemical Company with glass beads at 125 μm± 6% (MO-SCI Specialty Products) with 0.32 cm [1/8 inch] stainless tubing according to US 2011/0015346 A1. The internal liquid volume of CEF column is between 2.1 and 2.3 mL. Column temperature calibration is performed by using a mixture of NIST Standard Reference Material Linear polyethylene 1475a (1.0mg/ml) and Eicosane (2mg/ml) in ODCB. CEF temperature calibration consists of four steps: [1] Calculating the delay volume defined as the temperature offset between the measured peak elution temperature of Eicosane minus 30.00°C; [2] Subtracting the temperature offset of the elution temperature from CEF raw temperature data. It is noted that this temperature offset is a function of experimental conditions, such as elution temperature, elution flow rate, etc.; [3]Creating a linear calibration line transforming the elution temperature across a range of 30.00°C and 140.00°C such that NIST linear polyethylene 1475a has a peak temperature at 101.0°C, and Eicosane has a peak temperature of 30.0°C; [4] For the soluble fraction measured isothermally at 30°C, the elution temperature is extrapolated linearly by using the elution heating rate of 3°C/min. The reported elution peak temperatures are obtained such that the observed comonomer content calibration curve agrees with those previously reported in US 2011/0015346 A1. The data from this analysis is used in the calculation of CDBI as set forth herein.

**Hot Tack**

Hot tack measurements on the film are performed using an Enepay commercial testing machines according to ASTM F-1921 (Method B). Prior to testing the samples are conditioned for a minimum of 40hrs at 23°C and 50% R.H. per ASTM D-618 (Procedure A). The hot tack test simulates the filling of material into a pouch or bag before the seal has had a chance to cool completely.

Sheets of dimensions 8.5" by 14" are cut from the three-layer coextruded laminated film, with the longest dimension in the machine direction. Strips 1" wide and 14" long are cut from the film [samples need only be of sufficient length for clamping]. Tests are performed on these samples over a range of temperatures and the results reported as the maximum load as a function of temperature. Typical temperature steps are 5°C or 10°C with 6 replicates performed at each temperature. The parameters used in the test are as follows:

Specimen Width: 25.4 mm (1.0 in)

Sealing Pressure: 0.275 N/mm$^2$

Sealing Dwell Time: 1.0 s

Delay time: 0.18s

Peel speed: 200 mm/s

The Enepay machines make 1.27 cm [0.5 inch] seals. The data are reported as a hot tack curve where Average Hot Tack Force (N) is plotted as a function of Temperature, as for example shown in Figure 1. The Hot Tack Initiation temperature is the temperature required to achieve a pre-defined Minimum Hot Tack Force. This force is typically in the 1-2N range, but will vary depending on the specific application. The ultimate Hot Tack Strength is the peak in the hot tack curve. The Hot Tack Range is the range in temperature at which the seal strength exceeds the Minimum Hot Tack Force.

**Comonomer Distribution Branching Index (CDBI)**

CDBI is determined in accordance with U.S. Pat. No. 5,246,783 using the device described in U.S. Pat. No. 5,008,204, relying on data from the Crystallization Elution Fractionation (CEF) analysis set forth above.

EXAMPLES

The following examples illustrate the present invention, but are not intended to limit the scope of the invention.

Preparation of Blend Components and Comparative Composition A

Blend Components A and B for use in compositions of the present invention and Comparative Composition A are prepared as follows. All raw materials (monomer and comonomer) and the process solvent (a narrow boiling range high-purity isoparaffinic solvent) are purified with molecular sieves before introduction into the reaction environment. Hydrogen is supplied in pressurized cylinders as a high purity grade and is not further purified. The reactor monomer feed stream is pressurized via a mechanical compressor to above reaction pressure. The solvent and comonomer feed is pressurized via a pump to above reaction pressure. The individual catalyst components are manually batch diluted to specified component concentrations with purified solvent and pressured to above reaction pressure. All reaction feed flows are measured with mass flow meters and independently controlled with computer automated valve control systems.

The fresh comonomer feed is mechanically pressurized and can be injected into the process at several potential locations depending on reactor configuration which include: only the feed stream for the first reactor, only the feed stream for the second reactor, both the first and second reactor feed streams independently, or into a common stream prior to the solvent split to the two reactors. Some comonomer injection combinations are only possible when running dual reactor configuration.

Reactor configuration options include single reactor operation (for Blend Component A and Blend Component B) and dual series reactor operation (for Comparative Composition A).

The continuous solution polymerization reactor consists of a liquid full, non-adiabatic, isothermal, circulating, loop reactor which mimics a continuously stirred tank reactor (CSTR) with heat removal. Independent control of all fresh solvent, monomer, comonomer, hydrogen, and catalyst component feeds is possible. The total fresh feed stream to the reactor (solvent, monomer, comonomer, and hydrogen) is temperature controlled by passing the feed stream through a heat exchanger. The total fresh feed to the polymerization reactor is injected into the reactor at two locations with approximately equal reactor volumes between each injection location. The fresh feed is controlled with each injector receiving half of the total fresh feed mass flow. The catalyst components are injected into the polymerization reactor through a specially designed injection stinger and are combined into one mixed catalyst/cocatalyst feed stream prior to injection into the reactor. The primary catalyst component feed is computer controlled to maintain the reactor monomer conversion at a specified target. The cocatalyst component(s) is/are fed based on calculated specified molar ratios to the primary catalyst component. Immediately following each fresh injection location (either feed or catalyst), the feed streams are mixed with the circulating polymerization reactor contents with static mixing elements. The contents of the reactor are continuously circulated through heat exchangers responsible for removing much of the heat of reaction and with the temperature of the coolant side responsible for maintaining an isothermal reaction environment at the specified temperature. Circulation around the reactor loop is provided by a pump.

In the dual series reactor configuration (for Comparative Composition A), the effluent from the first polymerization reactor (containing solvent, monomer, comonomer, hydrogen, catalyst components, and polymer) exits the first reactor loop and is added to the second reactor loop downstream of the second reactor lower pressure fresh feed injection.

In all reactor configurations the final reactor effluent (second reactor effluent for dual series or the single reactor effluent) enters a zone where it is deactivated with the addition of and reaction with a suitable reagent (typically water). At this same reactor exit location other additives may also be added.

Following catalyst deactivation and additive addition, the reactor effluent enters a devolatization system where the polymer is removed from the non-polymer stream. The isolated polymer melt is pelletized and collected. The non-polymer stream passes through various pieces of equipment which separate most of the ethylene which is removed from the system. Most of the solvent and unreacted comonomer is recycled back to the reactor after passing through a purification system. A small amount of solvent and comonomer is purged from the process.

The polymerization conditions for Blend Components A and B are reported in Table 1. The First Reactor Catalyst (CatA) is (tert-butyl(dimethyl(3-(pyrrolidin-1-yl)-1H-inden-1-yl)silyl)amino)dimethyltitanium. The First Reactor Cocatalyst (CatB) is bis(hydrogenated tallow alkyl)methyl, tetrakis(pentafluorophenyl)borate(1-) amine. The First Reactor Scavenger (CatC) is modified methyl aluminoxane (MMAO).

**Table 1**

| | Units | Blend component A | Blend component B |
|---|---|---|---|
| Reactor Configuration | | Single Reactor | Single Reactor |
| Comonomer | | 1-octene | 1-octene |
| REACTOR FEEDS | | | |
| First Reactor Total Solvent Flow | kg/hr [lb/hr] | 907 [1999] | 509 [1123] |
| First Reactor Total Ethylene Flow | kg/hr [lb/hr] | 134 [297] | 176 [387] |
| First Reactor Total Comonomer Flow | kg/hr [lb/hr] | 180 [397] | 78 [171] |
| First Reactor Hydrogen Feed Flow | SCCM | 6466 | 7761 |
| REACTION | | | |
| First Reactor Control Temperature | °C | 110 | 170 |
| First Reactor Ethylene Conversion | % | 85.3 | 90.1 |
| First Reactor Viscosity | cP | 213 | 152 |
| First Reactor Catalyst | type | CatA | CatA |
| First Reactor Cocatalyst | type | CatB | CatB |
| First Reactor Scavenger | type | CatC | CatC |
| First Reactor Catalyst Efficiency | g Polymer/ g catalyst metal | 7,431,000 | 1,329,775 |
| First Reactor Cocatalyst to Catalyst Metal Molar Ratio | Ratio | 1.3 | 1.1 |
| First Reactor Scavenger to Catalyst Metal Molar Ratio | Ratio | 8.0 | 5.0 |

The polymerization conditions for Comparative Composition A which is made in the dual series reactor configuration are reported in Table 2. The First Reactor Catalyst (CatD) is [N-(1,1-dimethylethyl)-1,1-dimethyl-1-[(1,2,3,4,5-.eta.)-2,3,4,5-tetramethyl-2,4-cyclopentadien-1-yl]silanaminato(2-)-.kappa.N][(1,2,3,4-.eta.)-1,3-pentadiene]-Titanium. The First Reactor Cocatalyst (CatE) is tris (2,3,4,5,6-pentafluorophenyl) borane. The First Reactor Scavenger (CatC) is modified methyl aluminoxane (MMAO). The Second Reactor Catalyst is a Ziegler-Natta premix. The Second Reactor Cocatalyst (CatF) is triethylaluminum (TEA). Comparative Composition A is comprised of 58% of the First Reactor Component which is a homogeneously branched LLDPE component that has a melt index $I_2$ of 15 g/10 minutes and a density of 0.9016 g/cm$^3$, and 42% of the Second Reactor Component which is heterogeneously branched LLDPE component that has a melt index of 15 g/10 minutes and a density 0.9219 g/cm$^3$.

**Table 2**

|  | Units | Comparative composition A |
|---|---|---|
| Reactor Configuration |  | Dual Series |
| Comonomer |  | 1-octene |
| REACTOR FEEDS |  |  |
| First Reactor Total Solvent Flow | kg/hr [lb/hr] | 425 [938] |
| First Reactor Total Ethylene Flow | kg/hr [lb/hr] | 94 [207] |
| First Reactor Total Comonomer Flow | kg/hr [lb/hr] | 70 [155] |
| First Reactor Hydrogen Feed Flow | SCCM | 1,345 |
| Second Reactor Total Solvent Flow | kg/hr [lb/hr] | 127 [280] |
| Second Reactor Total Ethylene Flow | kg/hr [lb/hr] | 42 [92] |
| Second Reactor Total Comonomer Flow | kg/hr [lb/hr] | 44 [96] |
| Second Reactor Hydrogen Feed Flow | SCCM | 5,711 |
| REACTION |  |  |
| First Reactor Control Temperature | °C | 135 |
| First Reactor Ethylene Conversion | % | 76.0 |
| Second Reactor Control Temperature | °C | 190 |
| Second Reactor Ethylene Conversion | % | 86.0 |
| First Reactor Catalyst | type | CatD |
| First Reactor Cocatalyst | type | CatE |
| First Reactor Cocatalyst2 | type | CatC |
| First Reactor Catalyst Efficiency | g Polymer/ g catalyst metal | 800,000 |
| First Reactor Cocatalyst to Catalyst Metal Molar Ratio | Ratio | 3.0 |
| First Reactor Cocatalyst2 to Catalyst Metal Molar Ratio | Ratio | 5.0 |
| Second Reactor Catalyst | type | Ziegler-Natta premix |
| Second Reactor CoCatalyst | type | CatF |
| Second Reactor Catalyst Efficiency | g Polymer/ g catalyst metal | 219,000 |
| Second Reactor Al to Ti Molar Ratio | Ratio | 4.0 |

Various properties of Blend Components A and B are measured and reported in Table 3. Blend components A and B are homogeneously branched LLDPEs that can be used to form inventive compositions of the present invention. Blend Component C is a heterogeneously branched LLDPE commercially available from The Dow Chemical Company as DOWLEX™ 2517, and its properties are also measured and reported in Table 2. Blend Component C can be used with Blend Component A to also form inventive compositions of the present invention.

**Table 3**

|  | Unit | Blend component A | Blend component B | Blend component C |
|---|---|---|---|---|
| Type |  | homo | home | hetero |
| Density | g/cc | 0.887 | 0.916 | 0.917 |
| $I_2$ | g/10 min | 4.3 | 21.6 | 25.6 |
| $I_{10}/I_2$ |  | 6.1 | 6.1 | 6.9 |
| Mn (conv.) | g/mol | 36,968 | 21,390 | 15,713 |
| Mw (conv.) | g/mol | 76,919 | 48,121 | 50,639 |
| Mz (conv.) | g/mol | 125,250 | 80,015 | 127,379 |
| Mw/Mn |  | 2.08 | 2.25 | 3.22 |
| Mz/Mw |  | 1.63 | 1.66 | 2.52 |
| Eta* (0.1 rad/s) | Pa.s | 1,518 | 329 | 403 |
| Eta* (1.0 rad/s) | Pa.s | 1,496 | 328 | 395 |
| Eta* (10 rad/s) | Pa.s | 1,330 | 317 | 353 |
| Eta* (100 rad/s) | Pa.s | 835 | 252 | 250 |
| Eta* 0.1/Eta* 100 |  | 1.82 | 1.30 | 1.61 |
| Tm1 | °C | 82.6 | 108.9 | 123.9 |
| Tm2 | °C |  |  | 117.3 |
| Tm3 | °C |  |  | 107.2 |
| Tc1 | °C | 63.4 | 91.3 | 103.4 |
| CDBI |  | 99.4 | 82.9 | 54.6 |

Preparation of Inventive Compositions

Inventive Compositions 1 and 2 are prepared from Blend Components A, B, & C. Inventive Composition 1 is made using 30% of Blend Component A and 70% of Blend Component B. Inventive Composition 2 is made using 30% of Blend Component A and 70% of Blend Component C. Various properties of Inventive Compositions 1 and 2 and of Comparative Composition A compositions are measured and reported in Table 4.

**Table 4**

|  | Unit | Inventive Comp. 1 (30% A + 70% B) | Inventive Comp. 2 (30% A + 70% C) | Compar. Comp. A |
|---|---|---|---|---|
| Type |  | homo+homo | homo+hetero | homo+hetero |
| Density | g/cc | 0.908 | 0.910 | 0.911 |
| $I_2$ | g/10 min | 12.0 | 14.2 | 14.5 |
| $I_{10}/I_2$ |  | 6.4 | 6.7 | 6.7 |
| Mn (conv.) | g/mol | 23,797 | 18,004 | 19,288 |
| Mw (conv.) | g/mol | 57,200 | 59,081 | 51,596 |
| Mz (conv.) | g/mol | 102,620 | 136,899 | 121,489 |
| Mw/Mn |  | 2.40 | 3.28 | 2.68 |
| Mz/Mw |  | 1.79 | 2.32 | 2.35 |

(continued)

| | Unit | Inventive Comp. 1 (30% A + 70% B) | Inventive Comp. 2 (30% A + 70% C) | Compar. Comp. A |
|---|---|---|---|---|
| Eta* (0.1 rad/s) | Pa.s | 614 | 555 | 539 |
| Eta* (1.0 rad/s) | Pa.s | 612 | 545 | 526 |
| Eta* (10 rad/s) | Pa.s | 571 | 501 | 480 |
| Eta* (100 rad/s) | Pa.s | 414 | 354 | 348 |
| Eta* 0.1/Eta* 100 | | 1.49 | 1.57 | 1.55 |
| Tm1 | °C | 107.2 | 123.2 | 124.1 |
| Tm2 | °C | | 117.9 | 115.4 |
| Tm3 | °C | | 105.6 | 98.6 |
| Tc1 | °C | 93.7 | 106.3 | 99.5 |
| CDBI | | 67.0 | 54.1 | 73.3 |

Preparation of Coextruded Cast Films

3-layer coextruded cast films are prepared via a Collin cast film line. The cast line consists of two 20mm and one 30mm 25:1 L/D Dr. Collin extruders which have air cooled barrels and water cooled inlet feed zones. All extruders have Xaloy / Nordson barrier type screws. The barrels, the internals of the die and the feed block are all coated with corrosion resistant coating. The control system consists of the proprietary FECON Dr. Collin software which controls operations. The extrusion process is monitored by pressure transducers located before the breaker plates as well as four heater zones on the 30mm barrel and three heater zones on the 20mm barrels, one each at the adapters, two on the feedblock, and two zones on the die. The software also tracks the extruder RPM, amps, kg/hr rate, melt pressure (bar), line speed, and melt temperature for each extruder.

Equipment specifications include a Dr Collin three / five layer feed block and a Dr. Collin 250 mm flex lip cast die. The three chill rolls have a polished chrome finish, with the primary 144mm O.D. x 350mm long, and two additional chill rolls 72mm O.D. x 350mm long. The surface of these rolls is finished to um 5-6. All three chill rolls have chilled water circulating through them to provide quenching, with the addition of a GWK TECO microprocessor controlled temperature control unit for heating the rolls to a maximum of 90° C. Rate is measured by three iNOEX weigh hoppers with load cells on each hopper for gravimetric control. Film or sheet rolls are wound on a Dr. Collin two position winder on 3" I.D. cores. The takeoff film and sheet slitter station is located before the nip roll with the trim collected below the station on two tension adjustable take-up spools. The maximum throughput rate for the line is 12 kg/hr with three extruders, and maximum line speed is 65 m/min.

The cast film consists of 3 layers with a total film thickness of 0.09 mm [3.5 mils]. The ratio of the three layers is 25% sealant layer, 50% tie layer and 25% back layer. The sealant layer is formed from 100% of either Inventive Composition 1, Inventive Composition 2, or Comparative Composition A. Inventive Compositions 1 and 2 are formed by weighing the blend components (as indicated in Tables 2 and 3 above), and then tumble blending them for at least 30 minutes before they are fed into the extruder for forming the sealant layer. The tie layer is comprised of a blend of 90% ATTANE™ 4202 ULLDPE and 10% AMPLIFY GR 205 Functional Polymer, both of which are commercial resins supplied by The Dow Chemical Company. The two components are weighed and then tumble blended for at least 30 minutes before they are fed into the extruder for forming the tie layer. The back layer is comprised of Ultramid Nylon B36 LN supplied by BASF.

The Hot Tack of each of the films is measured as described above, and the results are shown in Figure 1. As shown in Figure 1, Inventive Compositions 1 and 2 each show a substantially higher hot tack strength across a broader range of temperatures than Comparative Composition A. Inventive Compositions 1 and 2 also show a substantial decrease in heat seal initiation temperature relative to Comparative Composition A.

**Claims**

1.  A composition comprising:

    (a) a first linear low density polyethylene having a density of 0.900 to 0.915 g/cm$^3$ and a melt index (I$_2$) of 5.0 to 25 g/10 min, wherein the linear low density polyethylene is a blend of at least two components:

    (i) 20-40% by weight of a second linear low density polyethylene, wherein the second linear low density polyethylene is a homogeneously branched ethylene/$\alpha$-olefin interpolymer having a density of 0.875-0.895 g/cm$^3$ and a melt index (I$_2$) of 2.0-6.0 g/10 min; and
    (ii) 60-80% by weight of a third linear low density polyethylene, wherein the density of the third linear low density polyethylene is at least 0.02 g/cm$^3$ greater than the density of the second linear low density polyethylene and wherein the melt index (I$_2$) of the third linear low density polyethylene is at least twice the melt index (I$_2$) of the second linear low density polyethylene.

2.  The composition of claim 1, wherein the third linear low density polyethylene is a homogeneously branched ethylene/$\alpha$-olefin interpolymer.

3.  The composition of claim 1, wherein the third linear low density polyethylene is a heterogeneously branched ethylene/$\alpha$-olefin interpolymer.

4.  The composition of any of the preceding claims, wherein the first linear low density polyethylene has a melt index of 10 to 20 g/10 minutes.

5.  The composition of any of the preceding claims, wherein the second linear low density polyethylene has a density of 0.890 g/cm$^3$ or less.

6.  The composition of any of the preceding claims, wherein the second linear low density has a melt index of 3.0 to 5.0.

7.  The composition of any of the preceding claims, wherein the density of the third linear low density polyethylene is at least 0.024 g/cm$^3$ greater than the density of the second linear low density polyethylene.

8.  The composition of any of the preceding claims, wherein the composition further comprises 1 to 99 percent by weight of a high pressure low density polyethylene.

9.  A film comprising at least one layer made from the composition of any of the preceding claims.

10. An article comprising at least one film layer according to claim 9.

**Patentansprüche**

1.  Eine Zusammensetzung, die Folgendes beinhaltet:

    (a) ein erstes lineares Polyethylen niederer Dichte, das eine Dichte von 0,900 bis 0,915 g/cm$^3$ und einen Schmelzindex (I$_2$) von 5,0 bis 25 g/10 min aufweist, wobei das lineare Polyethylen niederer Dichte ein Gemisch aus mindestens zwei Komponenten ist:

    (i) zu 20-40 Gewichts-% einem zweiten linearen Polyethylen niederer Dichte, wobei das zweite lineare Polyethylen niederer Dichte ein homogen verzweigtes Ethylen-$\alpha$-Olefin-Interpolymer ist, das eine Dichte von 0,875-0,895 g/cm$^3$ und einen Schmelzindex (I$_2$) von 2,0-6,0 g/10 min aufweist; und
    (ii) zu 60-80 Gewichts-% einem dritten linearen Polyethylen niederer Dichte, wobei die Dichte des dritten linearen Polyethylens niederer Dichte mindestens 0,02 g/cm$^3$ höher als die Dichte des zweiten linearen Polyethylens niederer Dichte ist und wobei der Schmelzindex (I$_2$) des dritten linearen Polyethylens niederer Dichte mindestens das Zweifache des Schmelzindex (I$_2$) des zweiten linearen Polyethylens niederer Dichte beträgt.

2.  Zusammensetzung gemäß Anspruch 1, wobei das dritte lineare Polyethylen niederer Dichte ein homogen verzweig-

tes Ethylen-$\alpha$-Olefin-Interpolymer ist.

3. Zusammensetzung gemäß Anspruch 1, wobei das dritte lineare Polyethylen niederer Dichte ein heterogen ver-zweigtes Ethylen-$\alpha$-Olefin-Interpolymer ist.

4. Zusammensetzung gemäß einem der vorhergehenden Ansprüche, wobei das erste lineare Polyethylen niederer Dichte einen Schmelzindex von 10 bis 20 g/10 Minuten aufweist.

5. Zusammensetzung gemäß einem der vorhergehenden Ansprüche, wobei das zweite lineare Polyethylen niederer Dichte eine Dichte von 0,890 g/cm$^3$ oder weniger aufweist.

6. Zusammensetzung gemäß einem der vorhergehenden Ansprüche, wobei das zweite lineare niederer Dichte einen Schmelzindex von 3,0 bis 5,0 aufweist.

7. Zusammensetzung gemäß einem der vorhergehenden Ansprüche, wobei die Dichte des dritten linearen Polyethylens niederer Dichte mindestens 0,024 g/cm$^3$ höher als die Dichte des zweiten linearen Polyethylens niederer Dichte ist.

8. Zusammensetzung gemäß einem der vorhergehenden Ansprüche, wobei die Zusammensetzung ferner zu 1 bis 99 Gewichtsprozent ein Hochdruckpolyethylen niederer Dichte beinhaltet.

9. Eine Folie, die mindestens eine Schicht beinhaltet, die aus der Zusammensetzung gemäß einem der vorhergehenden Ansprüche hergestellt ist.

10. Ein Artikel, der mindestens eine Folienschicht gemäß Anspruch 9 beinhaltet.


**Revendications**

1. Une composition comprenant :

(a) un premier polyéthylène basse densité linéaire ayant une masse volumique de 0,900 à 0,915 g/cm$^3$ et un indice de fluidité à chaud ($I_2$) de 5,0 à 25 g/10 min, où le polyéthylène basse densité linéaire est un mélange homogène d'au moins deux constituants :

(i) 20-40 % en poids d'un deuxième polyéthylène basse densité linéaire, où le deuxième polyéthylène basse densité linéaire est un interpolymère d'éthylène/$\alpha$-oléfine à ramification homogène ayant une masse volumique de 0,875-0,895 g/cm$^3$ et un indice de fluidité à chaud ($I_2$) de 2,0-6,0 g/10 min ; et
(ii) 60-80 % en poids d'un troisième polyéthylène basse densité linéaire, où la masse volumique du troisième polyéthylène basse densité linéaire est supérieure d'au moins 0,02 g/cm$^3$ à la masse volumique du deuxième polyéthylène basse densité linéaire et où l'indice de fluidité à chaud ($I_2$) du troisième polyéthylène basse densité linéaire fait au moins deux fois l'indice de fluidité à chaud ($I_2$) du deuxième polyéthylène basse densité linéaire.

2. La composition de la revendication 1, où le troisième polyéthylène basse densité linéaire est un interpolymère d'éthylène/$\alpha$-oléfine à ramification homogène.

3. La composition de la revendication 1, où le troisième polyéthylène basse densité linéaire est un interpolymère d'éthylène/$\alpha$-oléfine à ramification hétérogène.

4. La composition de n'importe lesquelles des revendications précédentes, où le premier polyéthylène basse densité linéaire a un indice de fluidité à chaud de 10 à 20 g/10 minutes.

5. La composition de n'importe lesquelles des revendications précédentes, où le deuxième polyéthylène basse densité linéaire a une masse volumique de 0,890 g/cm$^3$ ou moins.

6. La composition de n'importe lesquelles des revendications précédentes, où le deuxième basse densité linéaire a un indice de fluidité à chaud de 3,0 à 5,0.

**EP 3 294 806 B1**

7.  La composition de n'importe lesquelles des revendications précédentes, où la masse volumique du troisième polyéthylène basse densité linéaire est supérieure d'au moins 0,024 g/cm$^3$ à la masse volumique du deuxième polyéthylène basse densité linéaire.

8.  La composition de n'importe lesquelles des revendications précédentes, où la composition comprend en outre 1 à 99 pour cent en poids d'un polyéthylène basse densité haute pression.

9.  Un film comprenant au moins une couche fabriquée à partir de la composition de n'importe lesquelles des revendications précédentes.

10. Un article comprenant au moins une couche de film selon la revendication 9.

**Figure 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5747594 A
- WO 2009139957 A
- US 4599392 A
- US 5272236 A
- US 5278272 A
- US 5582923 A
- US 5733155 A
- US 3645992 A
- US 4076698 A
- US 3914342 A
- US 5854045 A
- US 5844045 A
- US 5246783 A
- US 5008204 A
- US 4486552 A
- US 20110015346 A1

**Non-patent literature cited in the description**

- **WILLIAMS ; WARD.** Polym. Letters. *J. Polym. Sci.,* 1968, vol. 6, 621
- **MONRABAL et al.** *Macromol. Symp.,* 2007, vol. 257, 71-79